# EUROPEAN PATENT APPLICATION

(11) **EP 2 667 286 A2**
(43) Date of publication of application: **27.11.2013**
(21) Application number: 13157258.8
(22) Date of filing: 28.02.2013
(51) Int. Cl.: G06F 3/0354

(54) **Display apparatus, input apparatus connected to display apparatus, and controlling methods thereof**

(30) Priority: 23.05.2012 KR 20120055005
(71) Applicant: Samsung Electronics Co., Ltd., Gyeonggi-do 443-742 (KR)
(72) Inventor: Choi, Hyun-mook, Seoul (KR); Choi, Kyoung-oh, Seoul (KR); Han, Young-ran, Seoul (KR)
(74) Representative: Clark, David James

(57) **Abstract**

A display apparatus, an input apparatus connected to the display apparatus, and controlling methods thereof are provided. The display apparatus includes: a plurality of displays which provide a screen displaying a signal-processed image; an interface which receives coordinate information of the screen recognized by the input apparatus, from the input apparatus; and a controller which controls the display apparatus to change and provide a luminance to a preset area on the screen provided by the plurality of displays, by using the received coordinate information.

## Description

### BACKGROUND

### 1. Field

The present general inventive concept generally relates to a display apparatus, an input apparatus connected to the display apparatus, and controlling methods thereof, and more particularly, to a display apparatus including a plurality of display units, an input apparatus connected to the display apparatus, and controlling methods thereof.

### 2. Description of the Related Art

A display system, such as an electronic blackboard, has been frequently used to input and output a user command on a display screen during a college class, a presentation, etc. Since the display system inputs the user command as if the user taking notes by hand when using an input apparatus such as an electronic pen, a user more conveniently inputs the user command when compared to an existing input apparatus.

Not only is a touch panel input method used but the display system is also used to receive a signal from an electronic pen and process the signal. The display system may be applied to a display apparatus including a plurality of display units. In this case, the display unit into which a user command is input is to be distinguished from the other displays. In order to distinguish the display units from one another, a mechanical apparatus is used in the display units or a method of setting an ID with respect to each of the display units on a system is used. However, in this case, an additional apparatus or additional artificial setting is required.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

The exemplary embodiments provide a display apparatus which includes a plurality of display units to change a frequency of a pulse width modulation (PWM) signal of backlight in order to distinguish the display units from one another, an input apparatus connected to the display apparatus, and controlling methods thereof.

The exemplary embodiments also provide a display apparatus which changes luminance of a display screen to easily sense backlight even on a low gradation screen when changing a frequency of a PWM signal of the backlight to distinguish the display units from one another, an input apparatus connected to the display apparatus, and controlling methods thereof.

According to an aspect of the exemplary embodiments, there is provided a display apparatus connected to an input apparatus. The display apparatus may include: a receiver which receives an image; a signal processor which signal-processes the received image; a plurality of displays which provide a screen displaying the signal-processed image; an interface which receives coordinate information of the screen recognized by the input apparatus, from the input apparatus; and a controller which controls the display apparatus to change and provide luminance of a preset area on at least one screen provided by the plurality of displays, by using the received coordinate information.

The preset area may be a partial area of the screen comprising a coordinate area corresponding to the received coordinate information.

If the current luminance of the coordinate area corresponding to the received coordinate information is lower than a preset value, the controller may control the display apparatus to change the current luminance of the preset area to a value greater than or equal to the preset value.

The interface may receive identification information of one of the plurality of displays from the input apparatus. The controller may control the display apparatus to change luminance of a screen provided by the one of the plurality displays by using the received identification information.

If the interface does not receive the identification information, the controller may change the luminance of the screen provided by the plurality of displays.

According to another aspect of the exemplary embodiments, there is provided an input apparatus connected to a display apparatus comprising a plurality of displays. The input apparatus may include: an image sensor which captures a preset pattern engraved in a particular area of one of the plurality of displays; a luminance sensor which measures a luminance signal of the captured particular area; a controller which recognizes a coordinate of the captured area by using the captured pattern and identifies one of the plurality of displays by using the measured luminance signal; and an interface which transmits coordinate information of the captured area and identification information of the one of the plurality of displays to the display apparatus.

The interface may receive frequency information of a pulse width modulation (PWM) signal of each of the plurality of displays from the display apparatus. The controller may compare the received frequency information with a frequency of the measured luminance signal to identify the one of the plurality of displays.

The input apparatus may further include: a storage which stores the frequency information of the PWM signal of each of the plurality of displays. The controller may compare the frequency information stored in the storage with the frequency of the measured luminance signal to identify one of the plurality of displays.

According to another aspect of the exemplary embodiments, there is provided a display system including a display apparatus including a plurality of displays and an input apparatus. The input apparatus may recognize coordinate information corresponding to a preset event if the preset event occurs with respect to one of the plurality of displays, and transmit the recognized coordinate information to the display apparatus. The display apparatus may receive the recognized coordinate information from the input apparatus, and change and provide luminance of a preset area on at least one screen provided by the one of the plurality of displays by using the received coordinate information.

According to another aspect of the exemplary embodiments, there is provided a method of controlling a display apparatus connected to an input apparatus. The method may include: receiving an image; signal-processing the received image; providing a screen displaying the signal-processed image through a plurality of displays; receiving coordinate information of the screen recognized by the input apparatus, from the input apparatus; and changing and providing a luminance to a preset area on the screen provided by the plurality of displays by using the received coordinate information.

The preset area may be a partial area of the screen comprising a coordinate area corresponding to the received coordinate information.

If the current luminance of the coordinate area corresponding to the received coordinate information is lower than a preset value, the luminance of the preset area may be changed to a value greater than or equal to the preset value.

The receiving of the coordinate information of the screen may include: receiving identification information of one of the plurality of displays from the input apparatus. The changing and providing of the luminance of the preset area may include: changing and providing the luminance of the screen provided by one of the plurality displays by using the received identification information.

The changing and providing of the luminance of the preset area may include: if the identification information of the one of the plurality of displays is not received, changing and providing the luminance to the screen provided by the plurality of displays.

According to another aspect of the exemplary embodiments, there is provided a method of controlling an input apparatus connected to a display apparatus comprising a plurality of displays. The method may include: capturing a preset pattern engraved in a particular area of one of the plurality of displays; measuring a luminance signal of the captured particular area; recognizing a coordinate of the captured area by using the captured pattern; identifying one of the plurality of displays by using the measured luminance signal; and transmitting coordinate information of the captured area and identification information of the one of the plurality of displays to the display apparatus.

The method may further include: receiving frequency information of a PWM signal of each of the plurality of displays from the display apparatus. The received frequency information may be compared with a frequency of the measured luminance signal to identify the one of the plurality of displays.

Pre-stored frequency information of a PWM signal of each of the plurality of displays may be compared with a frequency of the measured luminance signal to identify the one of the plurality of displays.

According to another aspect of the exemplary embodiments, there is provided a method of controlling a display system comprising a display apparatus comprising a plurality of displays and an input apparatus. The method may include: if a preset event occurs with respect to one of the plurality of displays, recognizing coordinate information corresponding to the preset event and transmitting the recognized coordinate information to the display apparatus; and receiving the recognized coordinate information from the input apparatus, and changing and providing a luminance of a preset area on at least one screen provided by the one of the plurality of displays by using the received coordinate information.

As described above, according to various exemplary embodiments of the present general inventive concept, even if a display apparatus includes a plurality of display units, the display apparatus may identify a display unit input by an input apparatus. Also, the display apparatus may accurately recognize light emitted from backlight even in a low gradation area to identify the display unit.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will be more apparent by describing certain exemplary embodiments with reference to the accompanying drawings, in which:
FIG. 1 is a view illustrating a display system according to an exemplary embodiment of the present general inventive concept;
FIG. 2 is a block diagram illustrating a structure of a display apparatus according to an exemplary embodiment of the present general inventive concept;
FIG. 3 is a block diagram illustrating a detailed structure of a first display unit of FIG. 2, according to an exemplary embodiment of the present general inventive concept;
FIG. 4 is a graph illustrating changes in luminance of a screen according to an exemplary embodiment of the present general inventive concept;
FIG. 5 is a block diagram illustrating a structure of an input apparatus according to an exemplary embodiment of the present general inventive concept;
FIG. 6 is a view illustrating an operation of a luminance sensor according to an exemplary embodiment of the present general inventive concept;
FIG. 7 is a block diagram illustrating a structure of an input apparatus according to another exemplary embodiment of the present general inventive concept;
FIG. 8 is a flowchart illustrating a method of controlling a display apparatus connected to an input apparatus according to an exemplary embodiment of the present general inventive concept;
FIG. 9 is a flowchart illustrating a method of controlling an input apparatus connected to a display apparatus according to an exemplary embodiment of the present general inventive concept; and
FIG. 10 is a flowchart illustrating a method of controlling a display system including a display apparatus and an input apparatus according to an exemplary embodiment of the present general inventive concept.

### DETAILED DESCRIPTION OF THE EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

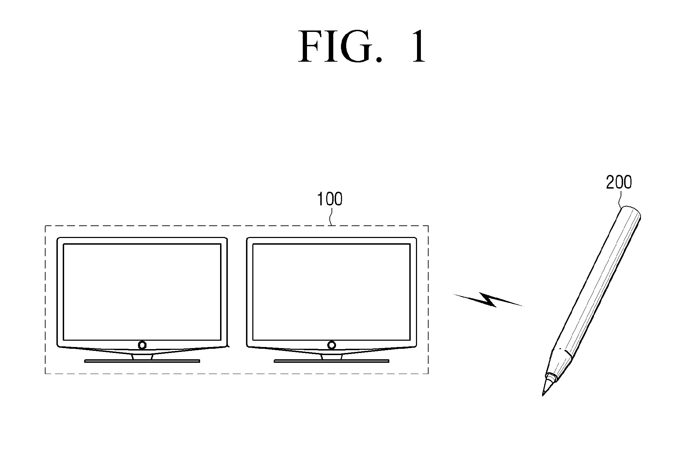

FIG. 1 is a view illustrating a display system according to an exemplary embodiment of the present general inventive concept. The display system includes a display apparatus 100 and an input apparatus 200. The display system may be realized as an electronic blackboard. The input apparatus 200 may be realized as an electronic pen.

The display apparatus 100 includes a plurality of display units (e.g., displays). A user inputs particular letters, lines, and figures on one of the plurality of display units as if taking notes through the input apparatus 200. The display apparatus 100 receives identification information and coordinate information about one of the plurality of display units into which a user command is input, from the input apparatus 200 in order to perform an operation corresponding to the user command.

In detail, preset patterns are respectively engraved on the plurality of display units of the display apparatus 100. The input apparatus 200 may include an image pickup unit to recognize the preset patterns engraved on the plurality of display units. The input apparatus 200 captures and analyzes the preset patterns engraved on the display units to recognize coordinates of particular areas of the display units.

The plurality of display units are respectively supplied with backlight through pulse width modulation (PWM) signals having different frequencies. The input apparatus 200 measures a luminance signal of light emitted from a panel of the display unit into which the user command is input and compares a frequency of the measured luminance signal with the frequencies of the PWM signals of the other display units in order to distinguish the display unit of the plurality of display units into which the user command is input, from the other display units.

The input apparatus 200 transmits the recognized coordinate information and identification information to the display apparatus 100 in order to allow the display apparatus 100 to perform an operation corresponding to the input user command.

The display apparatus 100 receives the coordinate information from the input apparatus 200, and changes and provides luminance of a preset area on at least one screen provided by the plurality of display units, by using the received coordinate information.

Here, the display apparatus 100 and the input apparatus 200 may communicate with each other through a wireless communication technology such as Wifi, Bluetooth, Infrared Data Association (IRDA), radio frequency (RF), IEEE 802.11, WLAN, HR WPAN, UWB, LR WPAN, IEEE 1394, or the like.

The display apparatus 100 includes two display units in FIG. 1, but the number of display units is not limited. Therefore, the display apparatus 100 may include three or more display units.

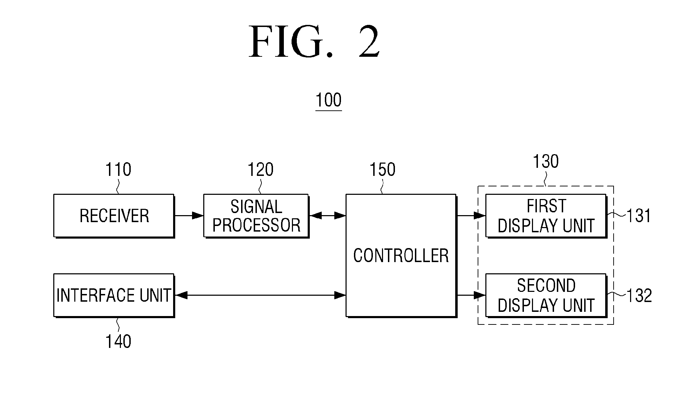

FIG. 2 is a block diagram illustrating a structure of the display apparatus 100 according to an exemplary embodiment of the present general inventive concept.

Referring to FIG. 2, the display apparatus 100 includes a receiver 110, a signal processor 120, a plurality of display units 130 (e.g., displays), an interface unit 140 (e.g., an interface), and a controller 150.

The receiver 110 receives an image. In detail, the receiver 110 may receive an image from a broadcasting station, a web server, a recording medium player connected to or installed in the display apparatus 100, or the like. The recording medium player refers to an apparatus which plays various types of recording media, such as a CD, a DVD, a hard disk, a Blu-ray disk, a memory card, a USB memory, etc., or images stored on the various types of recording media.

The signal processor 120 signal-processes the received image. In detail, the signal processor 120 may perform signal-processing, such as decoding, etc., with respect to the image received by the receiver 110 to display the image.

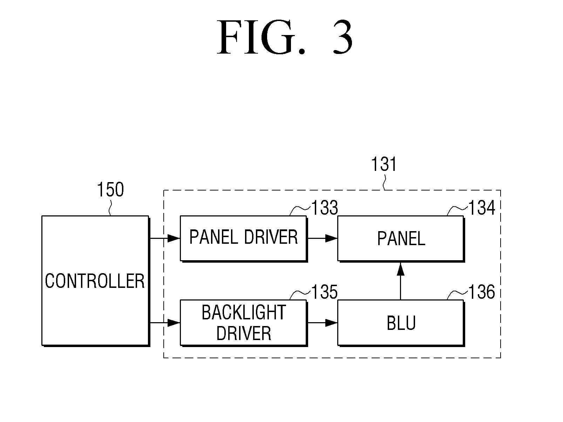

The plurality of display units 130 display the image signal-processed by the signal processor 120. In other words, the plurality of display units 130 may provide screens displaying the signal-processed image. The plurality of display units 130 includes two display units 131 and 132 in FIG. 2, but the number of display units is not limited. Each of the display units 131 and 132 will now be described in more detail with reference to FIG. 3.

FIG. 3 is a block diagram illustrating a detailed structure of the display unit 131 according to an exemplary embodiment of the present general inventive concept.

Referring to FIG. 3, the display unit 131 includes a panel driver 133, a panel 134, a backlight driver 135, and a backlight unit (BLU) 136.

The panel driver 133 drives the panel 134 under control of the controller 150.

The panel 134 is driven by the panel driver 133 to display the image signal-processed by the signal processor 120. In detail, the panel 134 includes a plurality of pixels, and the panel driver 133 respectively drives the pixels to display the pixels in response to the signal-processed image in order to display the signal-processed image.

The panel 134 includes preset patterns engraved on a surface thereof. The preset patterns may have different shapes to be distinguished from one another. Therefore, the input apparatus 200 captures the preset patterns engraved on the panel 134 and recognizes coordinates of a captured area by using the captured patterns. Here, if an image pickup unit of the input apparatus 200 is realized as a camera, the preset patterns may be formed to be recognizable by an IR camera.

The backlight driver 135 drives the BLU 136. In detail, the backlight driver 135 applies a driving signal (e.g., a PWM signal) having a particular frequency and a particular duty ratio to the BLU 136 under control of the controller 150.

The BLU 136 provides backlight to the panel 134 according to the driving signal applied by the backlight driver 135. The BLU 136 may be realized as various types of light-emitting devices such as a light-emitting diode (LED), a cold cathode fluorescence lamp (CCFL), an external electrode fluorescence lamp (EEFL), etc.

Each of the plurality of display units 130 may be realized like the display unit 131 described above. However, frequencies of driving signals applied to BLUs of the display units 130 may be differently set to distinguish the display units 130 from one another.

In the above-described exemplary embodiment, the plurality of display units includes panels and BLUs. However, in the case of self-light-emitting panel such as an OLED panel or the like, a BLU may be omitted.

The interface unit 140 performs a communication with the input apparatus 200. In detail, the interface unit 140 receives identification information of a display unit into which a user command is input and coordinate information of a display screen, from the input apparatus 200.

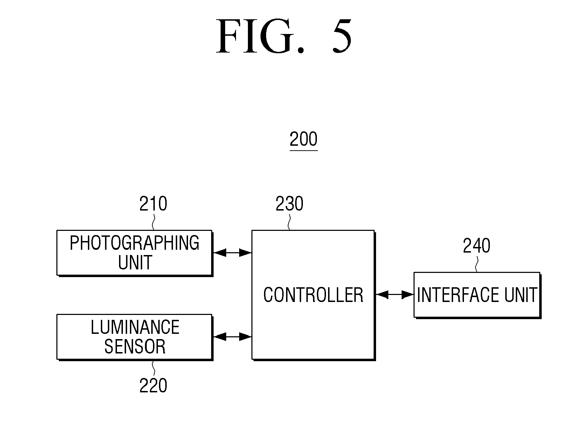

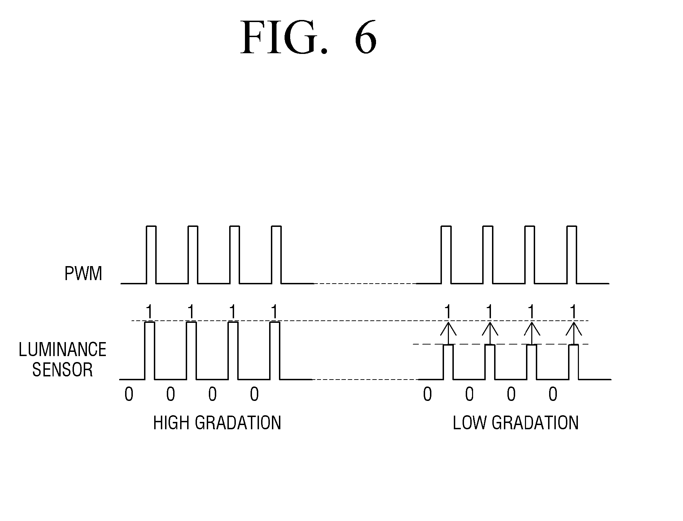

The interface unit 140 transmits frequency information of a driving signal used for each of the plurality of display units to the input apparatus 200. The frequency information transmitted to the input apparatus 200 may be used to identify one of the plurality of display units, i.e., the display unit into which the user command is input. This will be described in more detail later with reference to FIGS. 5 and 6.

The controller 150 controls to display a screen corresponding to the user command by using the identification information of the display unit and the coordinate information of the display screen which are received by the interface unit 140.

For example, if a user draws a circle on display unit A in the display apparatus 100 including display units A and B by using the input apparatus 200, the controller 150 controls the input apparatus 200 to receive identification information of the display unit A and coordinate information corresponding to the circle drawn by the user and display the circle on a screen displayed by the display unit A by using the received coordinate information.

The controller 150 controls the signal processor 120 or the panel driver 133 to display a screen corresponding to the user command. In detail, if the user draws a predetermined circle on a display unit as in the above-described example, the controller 150 controls the signal processor 120 to process an image frame in order to display the screen corresponding to the user command. The controller 150 controls the panel driver 133 to display the screen corresponding to the user command with respect to a pixel corresponding to a received coordinate.

The controller 150 controls the input apparatus 200 to change and provide luminance of a preset area on at least one screen provided by the plurality of display units 130, by using the coordinate information received from the input apparatus 200, so that a luminance sensor of the input apparatus 200 will recognize a luminance signal emitted from a display panel.

In detail, if the luminance of the display screen corresponding to a coordinate received from the input apparatus 200 is lower than a preset value, the controller 150 controls the input apparatus 200 to change the luminance of the preset area to the preset value and above.

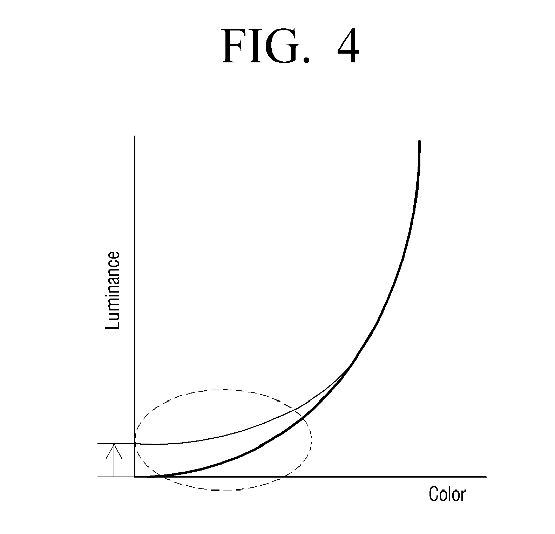

FIG. 4 is a graph illustrating changes in luminance of a screen according to an exemplary embodiment of the present general inventive concept.

In FIG. 4, x axis denotes color, and y axis denotes luminance. For example, if the color is represented with an RGB value, the color shows a lower RGB value, i.e., a lower luminance, as a coordinate on the x axis is closer to 0. Also, as the coordinate of the x axis becomes further from 0, the color shows a higher RGB value, i.e., a higher luminance.

Here, the low RGB value may not be measured by the input apparatus 200 due to a small amount of backlight emitted through the panel 134. Therefore, if an area of the screen corresponding to the coordinate information received from the input apparatus 200 is lower than a preset luminance value, the preset luminance value may be changed to a preset value and above.

Here, the preset area may be a partial area of a display screen including a coordinate area corresponding to the received coordinate information. Luminance of the area of the display screen may be changed so that a user viewing the display screen does not feel the change of the display screen.

Alternatively, if only the coordinate information is received from the input apparatus 200, i.e., the input apparatus 200 does not identify the display screen and thus does not transmit the identification information, the controller 150 controls to change luminance of preset areas of a plurality of screens provided by the plurality of display units 130 by using the received coordinate information. The luminance of the preset area may be changed to the preset luminance value and above so that the input apparatus 200 recognizes a luminance signal emitted from the display units 130.

The controller 150 controls the signal processor 120 to process an image frame or controls the panel driver 133 to change luminance of some pixels in order to change and display the luminance of the preset area of the display screen.

FIG. 5 is a block diagram illustrating a structure of the input apparatus 200 according to an exemplary embodiment of the present general inventive concept.

Referring to FIG. 5, the input apparatus 200 includes an image pickup unit 210 (e.g., a photographing unit, an image pickup device, an image sensor, an infrared sensor), a luminance sensor 220, a controller 230, and an interface unit 240 (e.g., an interface).

The image pickup unit 210 captures preset patterns engraved on the plurality of display units 130 of the display apparatus 100. In particular, the image pickup unit 210 may be realized as an IR camera, and the preset patterns may be formed to be recognizable by the IR camera.

The luminance sensor 220 measures a luminance signal of light emitted from the plurality of display units 130 of the display apparatus 100. For this purpose, the luminance sensor 220 may be realized as an apparatus such as a photodiode or a photo transistor and may convert light emitted from the display units 130 into an electric signal.

FIG. 6 is a view illustrating an operation of the luminance sensor 220 according to an exemplary embodiment of the present general inventive concept.

Referring to FIG. 6, a PWM signal applied from a backlight driver to drive a panel has a predetermined duty ratio and a predetermined frequency. The luminance sensor 220 measures only a part of backlight emitted from a BLU through the panel. The luminance sensor 220 converts the emitted backlight to an electric signal corresponding to the PWM signal.

Here, since a bright area having a high gradation, i.e. a high luminance value, emits a large amount of backlight, the luminance sensor 220 may easily sense the backlight having the large amount. However, if the luminance sensor 220 is not a high-quality sensor, the luminance sensor 220 may not normally sense a small amount of backlight emitted from a dark area having a low gradation, i.e., a low luminance value.

Therefore, the display apparatus 100 changes a luminance value of a screen area having a low gradation to a preset value and above so that the luminance value is easily sensed by the luminance sensor 220.

The controller 230 recognizes a coordinate of a captured area by using the preset patterns captured by the image pickup unit 210. In detail, the controller 230 compares the preset patterns captured by the image pickup unit 210 with the patterns engraved on the display units 130 and a pre-stored map table in which coordinates corresponding to the patterns engraved on the display units 130 are recorded, in order to recognize the coordinate of the captured area.

The controller 230 also identifies one of the plurality of display units 130 by using the luminance signal measured by the luminance sensor 220. In detail, the controller 230 compares a frequency of the luminance signal measured by the luminance sensor 220 with frequency information of each of the plurality of display units 130 received from the display apparatus 100, in order to identify one display unit.

The interface unit 240 transmits coordinate information of the captured area and identification information of one of the plurality of display units 130 to the display apparatus 100. The interface unit 240 also receives frequency information of a driving signal of each of the plurality of display units 130 from the display apparatus 100. The interface unit 240 of the input apparatus 200 communicates with the interface unit 140 of the display apparatus 100 through various types of wireless communication technologies such as Wifi, Bluetooth, IRDA, RF, IEEE 802.11, WLAN, HR WPAN, UWB, LR WPAN, IEEE 1394, etc.

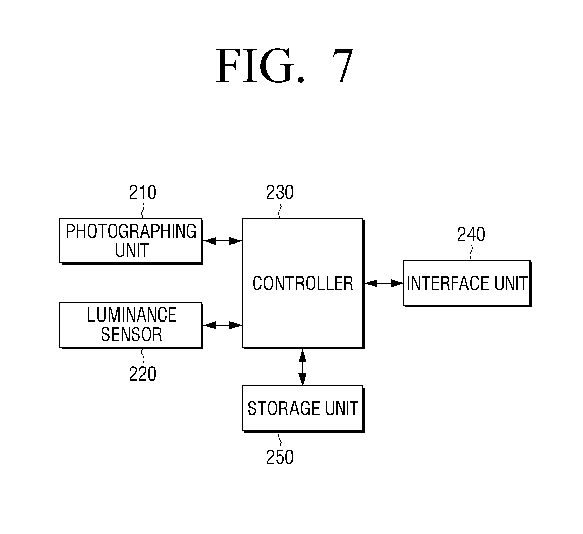

FIG. 7 is a block diagram illustrating a structure of the input apparatus 200 according to another exemplary embodiment of the present general inventive concept.

Referring to FIG. 7, the input apparatus 200 includes an image pickup unit 210, a luminance sensor 220, a controller 230, an interface unit 240 (e.g., an interface), and a storage unit 250 (e.g., a storage).

The storage unit 250 stores patterns engraved on display units, a map table in which coordinates corresponding to the patterns are recorded, and frequency information of a driving signal applied to each of the display units.

Therefore, the controller 230 compares patterns captured by the image pickup unit 210 with the map table to recognize a coordinate corresponding to a captured area. Also, the controller 230 compares a frequency of a luminance signal measured by the luminance sensor 220 with a frequency of the driving signal applied to each of the display units to identify one of the display units.

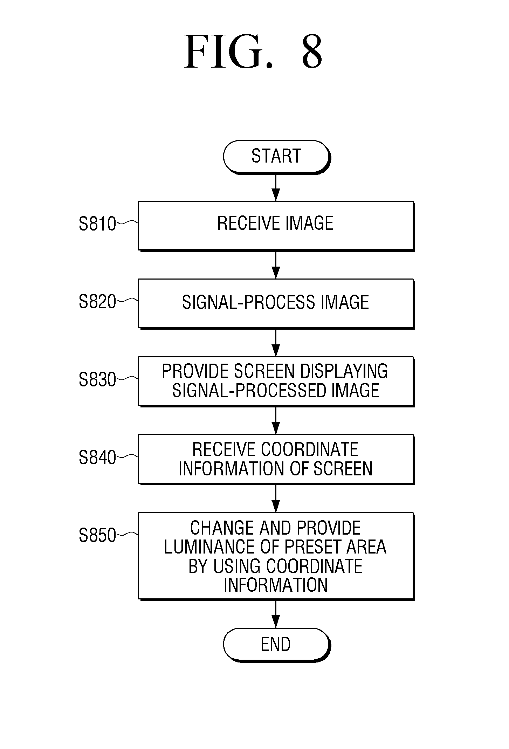

FIG. 8 is a flowchart illustrating a method of controlling a display apparatus connected to an input apparatus according to an exemplary embodiment of the present general inventive concept.

Referring to FIG. 8, in operation S810, the display apparatus 100 receives an image. In operation S820, the display apparatus 100 signal-processes the received image. In operation S830, the display apparatus 100 provides a display screen displaying the signal-processed image through a plurality of display units. In operation S840, the display apparatus 100 receives coordinate information of the display screen recognized by the input apparatus 200, from the input apparatus 200. In operation S850, the display apparatus 100 changes and provides luminance of a preset area on at least one screen provided by the plurality of display units, by using the received coordinate information. Here, the preset area may be a partial area of a screen including a coordinate area corresponding to the received coordinate information. If current luminance of the coordinate area corresponding to the received coordinate information is lower than a preset value, the current luminance of the preset area may be changed to a preset value and above and then provided in operation S850.

In operation S840, the coordinate information of the display screen may be received along with identification information of one of the plurality of display units from the input apparatus 200. In operation S850, the luminance of the screen provided by the corresponding display unit may be changed and provided by using the received identification information.

Here, if the identification information of one of the plurality of display units is not received, the luminance of a plurality of screens provided by the plurality of display units may be changed in operation S850.

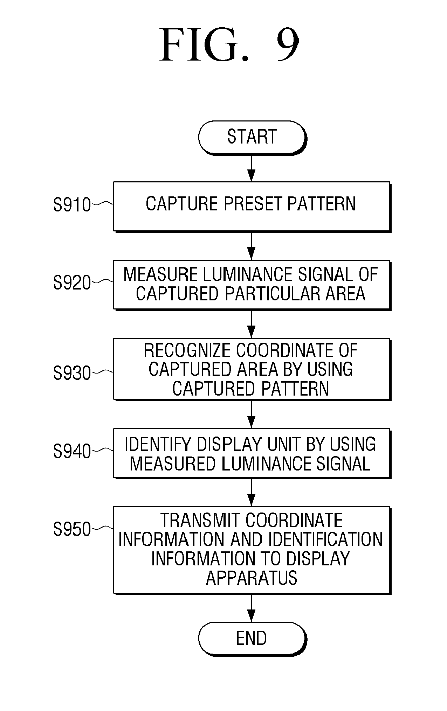

FIG. 9 is a flowchart illustrating a method of controlling an input apparatus connected to a display apparatus according to an exemplary embodiment of the present general inventive concept.

Referring to FIG. 9, in operation S910, the input apparatus 200 captures a preset pattern. In detail, the input apparatus 200 captures a preset pattern engraved in a particular area of one of the plurality of display units 130 of the display apparatus 100. In operation S920, the input apparatus 200 measures a luminance signal of the captured particular area. In operation S930, the input apparatus 200 recognizes a coordinate of the captured area by using the captured pattern. In operation S940, the input apparatus 200 identifies one of the plurality of display units 130 by using the measured luminance signal.

Here, the method may further include an operation of receiving frequency information of a PWM signal of each of the plurality of display units 130 from the display apparatus 100. In operation S940, the input apparatus 200 may compare the received frequency information with a frequency of the measured luminance signal to identify one of the plurality of display units 130.

Also, in operation S940, the input apparatus 200 may compare the received frequency information with a frequency of a PWM signal of each of the plurality of display units 130 pre-stored in a storage unit to identify one of the plurality of display units 130.

In operation S950, the input apparatus 200 transmits the coordinate information of the captured area and the identification information of one of the plurality of display units 130 to the display apparatus 100.

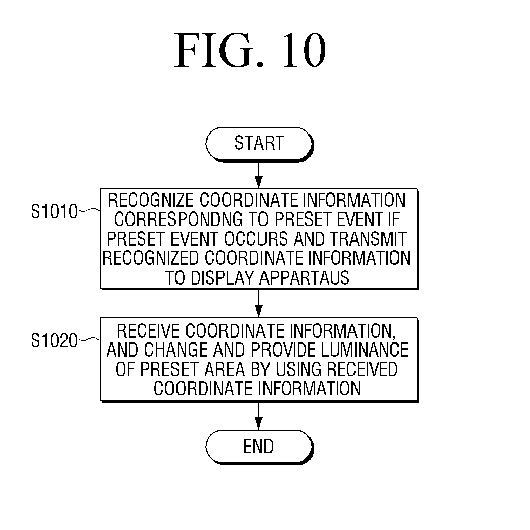

FIG. 10 is a flowchart illustrating a method of controlling a display system including a display apparatus and an input apparatus according to an exemplary embodiment of the present general inventive concept.

In operation S1010, the input apparatus 200 recognizes coordinate information corresponding to a preset event if the preset event occurs and transmits the recognized coordinate information to the display apparatus 100. In operation S1020, the display apparatus 100 receives the coordinate information from the input apparatus 200, and changes and provides luminance of a preset area on at least one screen provided by the plurality of display units 130, by using the received coordinate information.

Here, the preset event may be an event in which a user inputs a user command into a display unit by using the input apparatus 200.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus connected to an input apparatus, the display apparatus comprising:
a receiver which receives an image;
a signal processor which signal-processes the received image;
a plurality of display units which provide a screen displaying the signal-processed image;
an interface unit which receives coordinate information of the screen recognized by the input apparatus, from the input apparatus; and
a controller which controls to change and provide luminance of a preset area on at least one screen provided by the plurality of display units, by using the received coordinate information.

2. The display apparatus of claim 1, wherein the preset area is a partial area of the screen comprising a coordinate area corresponding to the received coordinate information.

3. The display apparatus of claim 1, wherein if current luminance of the coordinate area corresponding to the received coordinate information is lower than a preset value, the controller controls to change the current luminance of the preset area to a value greater than or equal to the preset value.

4. The display apparatus of claim 1, wherein the interface unit receives identification information of one of the plurality of display units from the input apparatus,
wherein the controller controls to change luminance of a screen provided by the corresponding display unit by using the received identification information.

5. The display apparatus of claim 4, wherein if the interface unit does not receive the identification information, the controller changes luminance of a plurality of screens provided by the plurality of display units.

6. An input apparatus connected to a display apparatus comprising a plurality of display units, the input apparatus comprising:
a photographing unit which captures a preset pattern engraved in a particular area of one of the plurality of display units;
a luminance sensor which measures a luminance signal of the captured particular area;
a controller which recognizes a coordinate of the captured area by using the captured pattern and identifies one of the plurality of display units by using the measured luminance signal; and
an interface unit which transmits coordinate information of the captured area and identification information of one of the plurality of display units to the display apparatus.

7. The input apparatus of claim 6, wherein the interface unit receives frequency information of a pulse width modulation (PWM) signal of each of the plurality of display units from the display apparatus,
wherein the controller compares the received frequency information with a frequency of the measured luminance signal to identify one of the plurality of display units.

8. The input apparatus of claim 7, further comprising:
a storage unit which stores the frequency information of the PWM signal of each of the plurality of display units,
wherein the controller compares the frequency information stored in the storage unit with the frequency of the measured luminance signal to identify one of the plurality of display units.

9. A display system comprising a display apparatus comprising a plurality of display units and an input apparatus,
wherein:
the input apparatus recognizes coordinate information corresponding to a preset event if the preset event occurs with respect to one of the plurality of display units, and transmits the recognized coordinate information to the display apparatus; and
the display apparatus receives the recognized coordinate information from the input apparatus, and changes and provides luminance of a preset area on at least one screen provided by the plurality of display units by using the received coordinate information.

10. A method of controlling a display apparatus connected to an input apparatus, the method comprising:
receiving an image;
signal-processing the received image;
providing a screen displaying the signal-processed image through a plurality of display units;
receiving coordinate information of the screen recognized by the input apparatus, from the input apparatus; and
changing and providing luminance of a preset area on at least one screen provided by the plurality of display units by using the received coordinate information.

11. The method of claim 10, wherein the preset area is a partial area of the screen comprising a coordinate area corresponding to the received coordinate information.

12. The method of claim 10, wherein if current luminance of the coordinate area corresponding to the received coordinate information is lower than a preset value, the luminance of the preset area is changed to a value greater than or equal to the preset value.

13. The method of claim 10, wherein:
the receiving of the coordinate information of the screen comprises: receiving identification information of one of the plurality of display units from the input apparatus; and
the changing and providing of the luminance of the preset area comprises: changing and providing luminance of a screen provided by the corresponding display unit by using the received identification information.

14. A method of controlling an input apparatus connected to a display apparatus comprising a plurality of display units, the method comprising:
capturing a preset pattern engraved in a particular area of one of the plurality of display units;
measuring a luminance signal of the captured particular area;
recognizing a coordinate of the captured area by using the captured pattern;
identifying one of the plurality of display units by using the measured luminance signal; and
transmitting coordinate information of the captured area and identification information of one of the plurality of display units to the display apparatus.

15. The method of claim 14, further comprising:
receiving frequency information of a PWM signal of each of the plurality of display units from the display apparatus,
wherein the received frequency information is compared with a frequency of the measured luminance signal to identify the one of the plurality of display units.
